# EUROPEAN PATENT APPLICATION

(11) **EP 4 746 371 A1**
(43) Date of publication of application: **20.05.2026**
(21) Application number: 24855321.6
(22) Date of filing: 19.04.2024
(51) Int. Cl.: H04L 61/2503, B60L 53/14

(54) **CHARGING CONTROL SYSTEM, CONTROL METHOD THEREFOR AND NEW ENERGY VEHICLE USING CHARGING CONTROL SYSTEM**

(30) Priority: 22.08.2023 CN 202311063474
(71) Applicant: Yutong Bus Co., Ltd., Zhengzhou, Henan 450061 (CN)
(72) Inventor: HOU, Haofeng, Zhengzhou, Henan 450061 (CN); SHEN, Zhanchu, Zhengzhou, Henan 450061 (CN); LI, Chunqing, Zhengzhou, Henan 450061 (CN); LI, Jing, Zhengzhou, Henan 450061 (CN); MA, Shuwei, Zhengzhou, Henan 450061 (CN); WEI, Jie, Zhengzhou, Henan 450061 (CN)
(74) Representative: Gulde & Partner
(86) International application number: PCT/CN2024/088815
(87) International publication number: WO 2025/039590

(57) **Abstract**

A charging control method. Each charger communicates with a BMS controller by using an EVCC. The EVCC changes a source address of each charger in a message sent by the charger to a different new address conforming to the national standard communication protocol, and the BMS controller changes a source address of a BMS in a received message including the new address to a corresponding new address conforming to the national standard communication protocol, so that the BMS controller communicates with the EVCC according to a reassigned source address, and the EVCC communicates with the charger according to an original national standard and/or European standard communication protocol. A system using the method and a new energy vehicle having the system are further disclosed. This method enables a plurality of national standard and/or European standard chargers to be controlled simultaneously and independently within a single BMS to charge a vehicle, thereby greatly reducing design costs of vehicle software and hardware, improving a charging speed, and bringing great charging convenience and compatibility to customers.

## Description

### TECHNICAL FIELD

The present invention belongs to the field of charging technologies for a new energy electric commercial vehicle, and specifically, relates to a charging control system, a control method therefor and a new energy vehicle using the charging control system.

### BACKGROUND

With current promotion and application of a new energy electric commercial vehicle overseas, a battery capacity configuration of electric vehicle is continuously increasing, market demand on a vehicle charging speed is increasingly high, and new requirements on vehicle charging control are further put forward. Currently, multi-gun charging for electric commercial vehicles in the industry mostly relies on two or more independent battery management systems (BMS for short below). Controlling the systems (battery management systems) to communicate with multiple independent chargers for battery charge results in high costs. Moreover, control software cannot achieve compatibility between European standard charging and national standard (Chinese standard) charging, therefore charging convenience is poor, and compatibility needs to be improved.

### SUMMARY

An objective of the present invention is to provide a charging control system, a control method therefor and a new energy vehicle using the charging control system, to resolve problems of high costs and poor compatibility in the related art caused by two or more BMSs required to control charging for a new energy vehicle using a national standard and/or a European standard communication protocol.

To resolve the foregoing technical problems, the present invention provides a control method for a charging control system, including a charging control method for a national standard charger and/or a charging control method for a European standard charger.

The charging control method for a national standard charger includes: sending, by the national standard charger according to a national standard communication protocol, a charging request message to an intermediate controller in a BMS when the BMS detects that the national standard charger is connected to an unspecified national standard charging port; reassigning, by the intermediate controller after receiving the message, a source address of the national standard charger in the message, and sending a modified message to a terminal controller of the BMS; and reassigning, by the terminal controller after receiving the modified message, a source address of the BMS, and responding to the received modified message, where a response process includes: performing communication between the terminal controller and the intermediate controller based on a reassigned source address; and performing communication between the intermediate controller and the national standard charger based on an original source address.

The charging control method for a European standard charger includes: sending, by the European standard charger according to a European standard communication protocol, a charging request message to an intermediate controller of a BMS when the BMS detects that the European standard charger is connected to a European standard charging port; converting, by the intermediate controller after receiving the message, the message using the European standard communication protocol into a message using a national standard communication protocol, reassigning a source address of the European standard charger in a converted message using the national standard communication protocol, and sending the modified message to a terminal controller of the BMS; and reassigning, by the terminal controller after receiving the modified message, a source address of the BMS, and responding to the received modified message, where a response process includes: performing communication between the terminal controller and the intermediate controller according to the national standard communication protocol, a source address in a communication message using a reassigned source address; and performing communication between the intermediate controller and the European standard charger according to the European standard communication protocol, a source address in a communication message using an original source address.

Beneficial effects are as follows: To resolve the problems of high charging costs and poor compatibility in the related art caused by two or more BMSs required to control charging for a new energy vehicle using a national standard and/or a European standard communication protocol, in the present invention, each charger communicates with the terminal controller of the BMS through single intermediate controller of the BMS. The intermediate controller changes a source address of each charger in a message sent by the charger to a different new address conforming to the national standard communication protocol, and the terminal controller changes the source address of the BMS in a received message including the new address to a corresponding new address conforming to the national standard communication protocol, so that the charger communicates with the intermediate controller according to an original national standard or European standard communication protocol, and the intermediate controller communicates with the terminal controller according to a reassigned national standard communication protocol address. In the present invention, only by changing a communication address and corresponding software control, a plurality of chargers are controlled simultaneously and independently within a single BMS to charge a vehicle, and a national standard charging communication protocol and a European standard charging communication protocol are compatible, thereby greatly reducing design costs of vehicle software and hardware, improving a charging speed, and bringing great charging convenience and compatibility to customers.

The method further includes: when the BMS detects that the national standard charger is connected to a specified national standard charging port, directly communicating, by the national standard charger, with the terminal controller by using a national standard communication protocol address.

Beneficial effects are as follows: The national standard charger and the terminal controller connected through the specified national standard charging port communicates directly by using an original source address of the national standard communication protocol, so that a calculation amount of software is reduced, and communication is faster when charging is performed by using only one national standard charger.

Further, the terminal controller is a BMU controller in the BMS.

Further, the intermediate controller is a vehicle charging communication controller in the BMS.

Further, the European standard charger communicates with the vehicle charging communication controller through a PLC.

To resolve the foregoing technical problems, the present invention further provides a charging control system. The system includes a BMS. The BMS includes an intermediate controller and a terminal controller. The intermediate controller is configured to be communicatively connected with a national standard charger and/or a European standard charger, and further communicatively connected with the terminal controller. The charging control system is configured to enable the terminal controller to communicate with chargers according to the following method,

including a charging control method for a national standard charger and/or a charging control method for a European standard charger. The charging control method for a national standard charger includes: sending, by the national standard charger according to a national standard communication protocol, a charging request message to an intermediate controller in a BMS when the BMS detects that the national standard charger is connected to an unspecified national standard charging port; reassigning, by the intermediate controller after receiving the message, a source address of the national standard charger in the message, and sending a modified message to a terminal controller of the BMS; and reassigning, by the terminal controller after receiving the modified message, a source address of the BMS, and responding to the received modified message, where a response process includes: performing communication between the terminal controller and the intermediate controller based on a reassigned source address; and performing communication between the intermediate controller and the national standard charger based on an original source address.

The charging control method for a European standard charger includes: sending, by the European standard charger according to a European standard communication protocol, a charging request message to an intermediate controller of a BMS when the BMS detects that the European standard charger is connected to a European standard charging port; converting, by the intermediate controller after receiving the message, the message using the European standard communication protocol into a message using a national standard communication protocol, reassigning a source address of the European standard charger in a converted message using the national standard communication protocol, and sending the modified message to a terminal controller of the BMS; and reassigning, by the terminal controller after receiving the modified message, a source address of the BMS, and responding to the received modified message, where a response process includes: performing communication between the terminal controller and the intermediate controller according to the national standard communication protocol, a source address in a communication message using a reassigned source address; and performing communication between the intermediate controller and the European standard charger according to the European standard communication protocol, a source address in a communication message using an original source address.

Beneficial effects are as follows: To resolve the problems of high charging costs and poor compatibility in the related art caused by two or more BMSs required to control charging for a new energy vehicle using a national standard and/or a European standard communication protocol, in the present invention, a charging control system according to the foregoing method is used, so that a plurality of chargers are controlled simultaneously and independently within a single BMS to charge a vehicle, and a national standard charging communication protocol and a European standard charging communication protocol are compatible, thereby greatly reducing design costs of vehicle software and hardware, improving a charging speed, and bringing great charging convenience and compatibility to customers.

Further, a manner for enabling a BMU controller to communicate normally with chargers further includes: when the BMS detects that the national standard charger is connected to a specified national standard charging port, directly communicating, by the national standard charger, with the terminal controller by using a national standard communication protocol address.

Further, the terminal controller is a BMU controller in the BMS.

Further, the intermediate controller is a vehicle charging communication controller in the BMS.

To resolve the foregoing technical problems, the present invention further provides a new energy vehicle, where the new energy vehicle is mounted with the charging control system according to any one of the foregoing aspects.

### BRIEF DESCRIPTION OF THE DRAWING

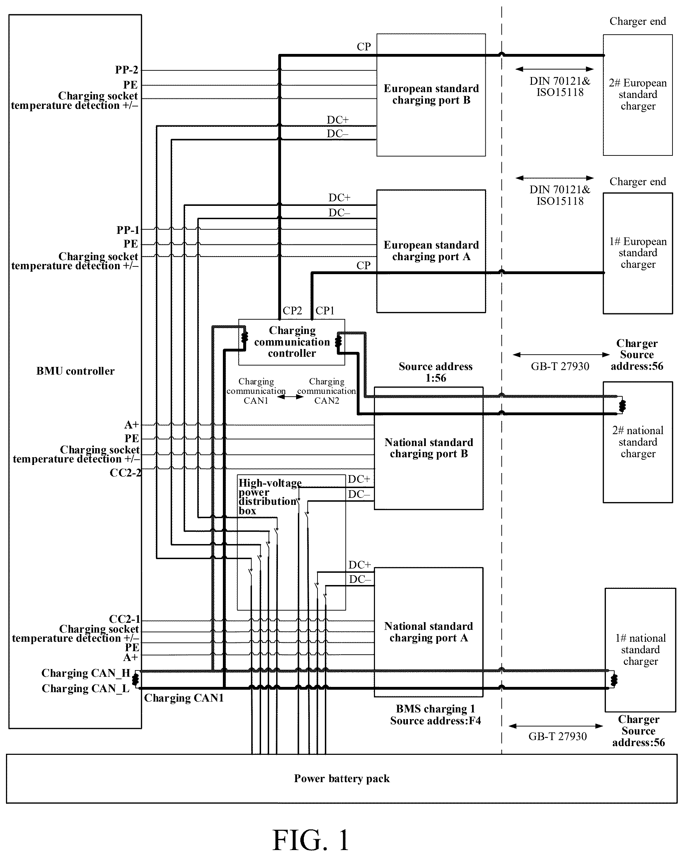

FIG. 1 is a principle diagram of a charging control system according to the present invention.

### DETAILED DESCRIPTION

A basic concept of the present invention is as follows: In the present invention, a source address is changed, so that a BMS and each charger corresponding to the BMS each have a corresponding different source address, so that when only one BMS is used to control a vehicle to be connected to different chargers for charging, charging ports are independent of each other and not affected. Finally, for a single vehicle, one BMS controls simultaneously and independently a plurality of charging piles to charge the vehicle, and a national standard charging communication protocol and a European standard charging communication protocol are compatible. Based on the concept, a charging control system, a control method therefor and a new energy vehicle using the charging control system in the present invention may be implemented.

The following describes the present invention in detail with reference to the accompanying drawing and method embodiments.

### Embodiment of a charging control system:

A charging control system in the present invention specifically includes a BMU controller (battery management unit) serving as a terminal controller, a vehicle charging communication controller (EVCC, electric vehicle communication controller) serving as an intermediate controller, and a high-voltage power distribution box (including a current Hall sensor, a charging relay, an insulation detection module, and the like). The EVCC is communicatively connected to a national standard charger and the BMU controller via a CAN, and is further communicatively connected to a European standard charger via a CP. The high-voltage power distribution box is configured to respond to the BMU controller when the BMU controller can communicate normally with chargers, so that a corresponding relay in the high-voltage power distribution box operates, to conduct a corresponding charging port with a charger to charge a vehicle.

Based on the foregoing charging control system, a control method for a charging control system in the present invention is used to resolve problems of high costs and poor compatibility in the related art caused by two or more independent battery management systems required to control charging for a new energy vehicle using both a national standard and a European standard communication protocol. For example, two national standard charging lines and two European standard charging lines are simultaneously controlled, and a principle diagram is shown in FIG. 1, specifically including:
(1) After a BMS of a vehicle detects a CC2-1 signal (where CC is a national standard insertion detection signal), the BMS identifies that a 1# national standard charger charges the vehicle through a national standard charging port A (where the national standard charging port A is a specified national standard charging port, and the specified national standard charging port in this solution is a charging port that can communicate with a charger without using an EVCC). The 1# national standard charger is directly communicatively connected to the BMU controller via a CAN1, where a source address of the BMS is ID1:F4, a source address of the 1# national standard charger is ID1:56, and the BMU controller and the 1# national standard charger send a communication message to each other according to a national standard communication protocol (GB/T 27930) and the foregoing addresses. If the two communicate normally, a relay corresponding to the national standard charging port A in the high-voltage power distribution box is controlled to be closed, to conduct the national standard charging port A with the 1# national standard charger, so as to charge the vehicle.
(2) When the BMS of the vehicle detects a CC2-2 signal, the BMS identifies that a 2# national standard charger charges the vehicle through a national standard charging port B (where the national standard charging port B is not a specified national standard charging port). The 2# national standard charger is communicatively connected to the EVCC via a CAN2 according to a default original source address 56 of the charger and an original source address 56 of the BMS, and sends a charging request message to the EVCC according to the national standard communication protocol (GB/T 27930).

After receiving the charging request message, the EVCC reassigns a source address of the 2# national standard charger in the charging request message to ID2:66, and communicates with the BMU controller via the CAN1, where only the source address of the 2# national standard charger in a charging request message is changed, and all other communication content is forwarded to the BMU controller via the CAN1 according to the national standard communication protocol.

After identifying ID2:66 in the charging request message in the CAN1 network, the BMU controller reassigns a source address of the BMS to ID2:E5, and responds to the charging request of the 2# national standard charger based on the source address ID2:E5, where only the source address of the BMS in the charging request message is changed, and all other communication content is forwarded according to the national standard communication protocol. A response process is as follows: The BMU controller sends a response message based on the source address ID2:E5; and the EVCC, after receiving the response message, identifies the source address of the BMU controller in the response message, changes the source address of the 2# national standard charger in the response message to the original source address (the default original source address 56 of the BMS) corresponding to the source address ID2:66, and sends a response message with the changed source address to the 2# national standard charger, so that the BMU controller communicates with the EVCC based on the reassigned source address, and the EVCC communicates with the 2# national standard charger based on the original source address (the default original source address 56 of the charger and the default original source address 56 of the BMS). In this way, the BMU controller communicates successfully with the 2# national standard charger, and a relay corresponding to the national standard charging port B in the high-voltage power distribution box is controlled to be closed, to conduct the national standard charging port B with the 2# European standard charger, so as to charge the vehicle.

(3) When the BMS of the vehicle detects a PP-1 signal, the BMS identifies that a 1# European standard charger charges the vehicle through a European standard charging port A. The 1# European standard charger is communicatively connected to the EVCC through a CP carrier line based on a default original source address of both communication parties, and an SECC communication module inside the 1# European standard charger sends a PLC charging request message to the EVCC according to a European standard communication protocol (DIN70121 or ISO15118).

After receiving the PLC charging request message sent by the 1# European standard charger, the EVCC converts the PLC charging request message using the European standard communication protocol into a CAN charging request message using the national standard communication protocol, reassigns a source address of the 1# European standard charger in the charging request message to ID3:76, and communicates with the BMU controller via the CAN1, where only the source address of the 1# European standard charger in the charging request message is changed, and all other communication content is forwarded to the BMU controller via the CAN1 according to the national standard communication protocol.

After identifying ID3:76 in the charging request message in the CAN1 network, the BMU controller reassigns the source address of the BMS to ID3:D6, and responds to the charging request of the 1# European standard charger based on the source address ID3:D6, where only the source address of the BMS in the charging request message is changed, and all other communication content is forwarded according to the national standard communication protocol. A response process is as follows: The BMU controller sends, based on the source address ID3:D6, a response message generated according to the national standard communication protocol; and the EVCC, after receiving the response message, identifies the source address of the BMU controller in the response message, converts the response message into a response message using the European standard communication protocol, changes a source address of the 1# European standard charger in the converted response message to the original source address corresponding to the source address ID3:76, and sends a response message with the changed source address to the 1# European standard charger, so that the BMU controller communicates with the EVCC based on the reassigned source address, and the EVCC communicates with the 1# European standard charger based on the original source address. In this way, the BMU controller communicates successfully with the 1# European standard charger, and a relay corresponding to the European standard charging port A in the high-voltage power distribution box is controlled to be closed, to conduct the European standard charging port A with the 1# European standard charger, so as to charge the vehicle.

(4) When the BMS of the vehicle detects a PP-2 signal, the BMS identifies that a 2# European standard charger charges the vehicle through a European standard charging port B. The 2# European standard charger is communicatively connected to the EVCC through a CP carrier line based on a default original source address of both communication parties, and an SECC communication module inside the 2# European standard charger sends a PLC charging request message to the EVCC according to a European standard communication protocol (DIN70121 or ISO15118).

After receiving the PLC charging request message sent by the 2# European standard charger, the EVCC converts the PLC charging request message using the European standard communication protocol into a CAN charging request message using the national standard communication protocol, reassigns a source address of the 1# European standard charger in the charging request message to ID4:86, and communicates with the BMU controller via the CAN1, where only the source address of the 2# European standard charger in the charging request message is changed, and all other communication content is forwarded to the BMU controller via the CAN1 according to the national standard communication protocol.

After identifying ID4:86 in the charging request message in the CAN1 network, the BMU controller reassigns the source address of the BMS to ID4:C7, and responds to the charging request of the 2# European standard charger based on the source address ID4:C7, where only the source address of the BMS in the charging request message is changed, and all other communication content is forwarded according to the national standard communication protocol. A response process is as follows: The BMU controller sends, based on the source address ID4:C7, a response message generated according to the national standard communication protocol; and the EVCC, after receiving the response message, identifies the source address of the BMU controller in the response message, converts the response message into a response message using the European standard communication protocol, changes a source address of the 2# European standard charger in the converted response message to the original source address corresponding to the source address ID4:86, and sends a response message with the changed source address to the 2# European standard charger, so that the BMU controller communicates with the EVCC based on the reassigned source address, and the EVCC communicates with the 2# European standard charger based on the original source address. In this way, the BMU controller communicates successfully with the 2# European standard charger, and a relay corresponding to the European standard charging port B in the high-voltage power distribution box is controlled to be closed, to conduct the European standard charging port B with the 2# European standard charger, so as to charge the vehicle.

According to the present invention, for a single vehicle, one battery management system controls simultaneously and independently a plurality of charging piles to charge the vehicle, and a national standard charging communication protocol and a European standard charging communication protocol are compatible, thereby greatly reducing design costs of vehicle software and hardware, improving a charging speed, and bringing great charging convenience and compatibility to customers.

### Embodiment of a control method for a charging control system:

According to a control method for a charging control system in the present invention, in the present invention, a vehicle charging communication controller changes a communication source address between a charging port and a charger, converts a message uploaded by using a European standard into a message using a national standard, and communicates with a battery management unit controller in a battery management system, so that control of charging ports in one battery management system is independent of each other, one battery management system for a single vehicle controls simultaneously and independently a plurality of charging piles to charge the vehicle, and a national standard charging communication protocol and a European standard charging communication protocol are compatible. Specific steps are described in detail in the embodiment of the charging control system, and details are not described herein again.

### Embodiment of a new energy vehicle:

According to a new energy vehicle in the present invention, when the new energy vehicle is mounted with the foregoing charging control system, the vehicle may be charged through national standard single-gun charging, national standard dual-gun independent charging, European standard single-gun charging, and European standard dual-gun independent charging. By interchanging a national standard and a European standard of a vehicle charging port, the vehicle may implement functions of national standard single-gun + European standard single-gun independent charging, national standard dual-gun + European standard dual-gun independent charging, national standard multi-gun (above a 3-gun level) independent charging, and European standard multi-gun (above a 3-gun level) independent charging.

## Claims

1. A control method for a charging control system, comprising a charging control method for a national standard charger and/or a charging control method for a European standard charger, wherein
the charging control method for a national standard charger comprises: sending, by the national standard charger according to a national standard communication protocol, a charging request message to an intermediate controller in a BMS when the BMS detects that the national standard charger is connected to an unspecified national standard charging port; reassigning, by the intermediate controller after receiving the message, a source address of the national standard charger in the message, and sending a modified message to a terminal controller of the BMS; and reassigning, by the terminal controller after receiving the modified message, a source address of the BMS, and responding to the received modified message, where a response process comprises: performing communication between the terminal controller and the intermediate controller based on a reassigned source address; and performing communication between the intermediate controller and the national standard charger based on an original source address;
the charging control method for a European standard charger comprises: sending, by the European standard charger according to a European standard communication protocol, a charging request message to an intermediate controller of a BMS when the BMS detects that the European standard charger is connected to a European standard charging port; converting, by the intermediate controller after receiving the message, the message using the European standard communication protocol into a message using a national standard communication protocol, reassigning a source address of the European standard charger in a converted message using the national standard communication protocol, and sending the modified message to a terminal controller of the BMS; and reassigning, by the terminal controller after receiving the modified message, a source address of the BMS, and responding to the received modified message, where a response process comprises: performing communication between the terminal controller and the intermediate controller according to the national standard communication protocol, a source address in a communication message using a reassigned source address; and performing communication between the intermediate controller and the European standard charger according to the European standard communication protocol, a source address in a communication message using an original source address.

2. The control method for a charging control system according to claim 1, further comprising: when the BMS detects that the national standard charger is connected to a specified national standard charging port, directly communicating, by the national standard charger, with the terminal controller by using a national standard communication protocol address.

3. The control method for a charging control system according to claim 1, wherein the terminal controller is a BMU controller in the BMS.

4. The control method for a charging control system according to claim 1, wherein the intermediate controller is a vehicle charging communication controller in the BMS.

5. The control method for a charging control system according to claim 4, wherein the European standard charger communicates with the vehicle charging communication controller through a PLC.

6. A charging control system, wherein the system comprises a BMS, the BMS comprises an intermediate controller and a terminal controller, and the intermediate controller is configured to be communicatively connected with a national standard charger and/or a European standard charger, and further communicatively connected with the terminal controller; and the charging control system is configured to enable the terminal controller to communicate with chargers according to the following method,
comprising a charging control method for a national standard charger and/or a charging control method for a European standard charger, wherein the charging control method for a national standard charger comprises: sending, by the national standard charger according to a national standard communication protocol, a charging request message to an intermediate controller in a BMS when the BMS detects that the national standard charger is connected to an unspecified national standard charging port; reassigning, by the intermediate controller after receiving the message, a source address of the national standard charger in the message, and sending a modified message to a terminal controller of the BMS; and reassigning, by the terminal controller after receiving the modified message, a source address of the BMS, and responding to the received modified message, where a response process comprises: performing communication between the terminal controller and the intermediate controller based on a reassigned source address; and performing communication between the intermediate controller and the national standard charger based on an original source address;
the charging control method for a European standard charger comprises: sending, by the European standard charger according to a European standard communication protocol, a charging request message to an intermediate controller of a BMS when the BMS detects that the European standard charger is connected to a European standard charging port; converting, by the intermediate controller after receiving the message, the message using the European standard communication protocol into a message using a national standard communication protocol, reassigning a source address of the European standard charger in the converted message using the national standard communication protocol, and sending the modified message to a terminal controller of the BMS; and reassigning, by the terminal controller after receiving the modified message, a source address of the BMS, and responding to the received modified message, where a response process comprises: performing communication between the terminal controller and the intermediate controller according to the national standard communication protocol, a source address in a communication message using a reassigned source address; and performing communication between the intermediate controller and the European standard charger according to the European standard communication protocol, a source address in a communication message using an original source address.

7. The charging control system according to claim 6, wherein a manner for enabling a BMU controller to communicate normally with chargers further comprises: when the BMS detects that the national standard charger is connected to a specified national standard charging port, directly communicating, by the national standard charger, with the terminal controller by using a national standard communication protocol address.

8. The charging control system according to claim 6, wherein the terminal controller is a BMU controller in the BMS.

9. The charging control system according to claim 6, wherein the intermediate controller is a vehicle charging communication controller in the BMS.

10. A new energy vehicle, wherein the new energy vehicle is mounted with the charging control system according to any one of claims 6 to 9.
